# EUROPEAN PATENT APPLICATION

(11) **EP 4 738 110 A1**
(43) Date of publication of application: **06.05.2026**
(21) Application number: 25209691.2
(22) Date of filing: 20.10.2025
(51) Int. Cl.: G06F 9/445

(54) **APPLICATION PRE-LAUNCH SYSTEM**

(30) Priority: 05.11.2024 US 202418937653
(71) Applicant: Roku, Inc., San Jose, CA 95110 (US)
(72) Inventor: FOGG, Andrew Peter, San Jose, 95110 (US); JAGT, Robert Paul, San Jose, 95110 (US); KODALI, Srinivasa Chakravarthy, San Jose, 95110 (US); PHAN, Binh Thanh, San Jose, 95110 (US); ROBERTS, John, San Jose, 95110 (US); SHEREMET, Dmitry, San Jose, 95110 (US); TSISHKO, Yan, San Jose, 95110 (US); WANG, Weihua, San Jose, 95110 (US)
(74) Representative: Yang, Shu

(57) **Abstract**

Disclosed herein are system, apparatus, article of manufacture, method and/or computer program product embodiments, and/or combinations and sub-combinations thereof, for an application pre-launch system. An example embodiment operates by detecting a user interaction associated with launching an app configured to operate on a computing device. A first launch command is provided to a server associated with the app. The first launch command is configured to instruct the server to begin loading application data for the app into a cache. Application code of the app is executed, wherein the application code is configured to provide a second launch command to the server. The application data is received from the cache responsive to the second launch command. The app is launched on the computing device using the application data received from the cache. After the launching, the app is configured to receive a user command.

## Description

### BACKGROUND

This application claims priority to U.S. Non-Provisional application 18/937,653 filed on November 5, 2024, which is incorporated by reference herein in its entirety.

### FIELD

This disclosure is generally directed to an application pre-launch system.

### SUMMARY

Provided herein are system, apparatus, article of manufacture, method and/or computer program product embodiments, and/or combinations and sub-combinations thereof, for an application pre-launch system.

An example embodiment operates by detecting a user interaction associated with launching an app configured to operate on a computing device. A first launch command is provided to a server associated with the app. The first launch command is configured to instruct the server to begin loading application data for the app into a cache. Application code of the app is executed, wherein the application code is configured to provide a second launch command to the server. The application data is received from the cache responsive to the second launch command. The app is launched on the computing device using the application data received from the cache. After the launching, the app is configured to receive a user command.

### BRIEF DESCRIPTION OF THE FIGURES

The accompanying drawings are incorporated herein and form a part of the specification.
FIG. 1 illustrates a block diagram of a multimedia environment, according to some embodiments.
FIG. 2 illustrates a block diagram of a streaming media device, according to some embodiments.
FIG. 3 is a block diagram illustrating example functionality for an application pre-launch system (APS), according to some embodiments.
FIG. 4 is a flowchart for a method for application pre-launch system (APS), according to an embodiment.
FIG. 5 is a flowchart for a method for application pre-launch system (APS), according to another example embodiment.
FIG. 6 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for an application pre-launch system.

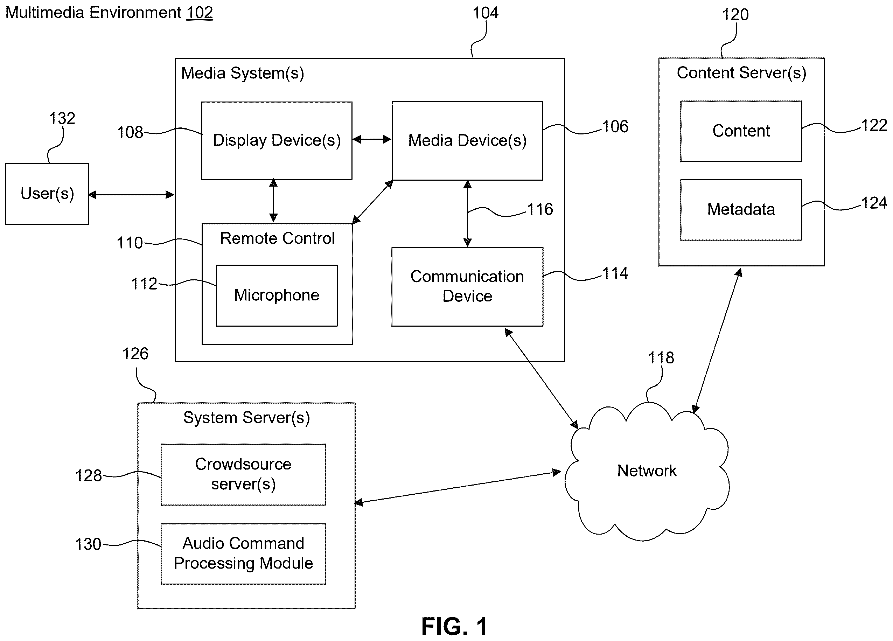

Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

The multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108.

Each media device 106 may be configured to communicate with network 118 via a communication device 114. The communication device 114 may include, for example, a cable modem or satellite TV transceiver. The media device 106 may communicate with the communication device 114 over a link 116, wherein the link 116 may include wireless (such as WiFi) and/or wired connections.

In various embodiments, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device 106 and/or display device 108, such as a remote control, a tablet, laptop computer, smartphone, wearable, on-screen controls, integrated control buttons, audio controls, or any combination thereof, to name just a few examples. In an embodiment, the remote control 110 wirelessly communicates with the media device 106 and/or display device 108 using cellular, Bluetooth, infrared, etc., or any combination thereof. The remote control 110 may include a microphone 112, which is further described below.

The multimedia environment 102 may include a plurality of content servers 120 (also called content providers, channels or sources 120). Although only one content server 120 is shown in FIG. 1, in practice the multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index.

The multimedia environment 102 may include one or more system servers 126. The system servers 126 may operate to support the media devices 106 from the cloud. It is noted that the structural and functional aspects of the system servers 126 may wholly or partially exist in the same or different ones of the system servers 126.

The media devices 106 may exist in thousands or millions of media systems 104. Accordingly, the media devices 106 may lend themselves to crowdsourcing embodiments and, thus, the system servers 126 may include one or more crowdsource servers 128.

For example, using information received from the media devices 106 in the thousands and millions of media systems 104, the crowdsource server(s) 128 may identify similarities and overlaps between closed captioning requests issued by different users 132 watching a particular movie. Based on such information, the crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, the crowdsource server(s) 128 may operate to cause closed captioning to be automatically turned on and/or off during future streamings of the movie.

The system servers 126 may also include an audio command processing module 130. As noted above, the remote control 110 may include a microphone 112. The microphone 112 may receive audio data from users 132 (as well as other sources, such as the display device 108). In some embodiments, the media device 106 may be audio responsive, and the audio data may represent verbal commands from the user 132 to control the media device 106 as well as other components in the media system 104, such as the display device 108.

In some embodiments, the audio data received by the microphone 112 in the remote control 110 is transferred to the media device 106, which is then forwarded to the audio command processing module 130 in the system servers 126. The audio command processing module 130 may operate to process and analyze the received audio data to recognize the user 132's verbal command. The audio command processing module 130 may then forward the verbal command back to the media device 106 for processing.

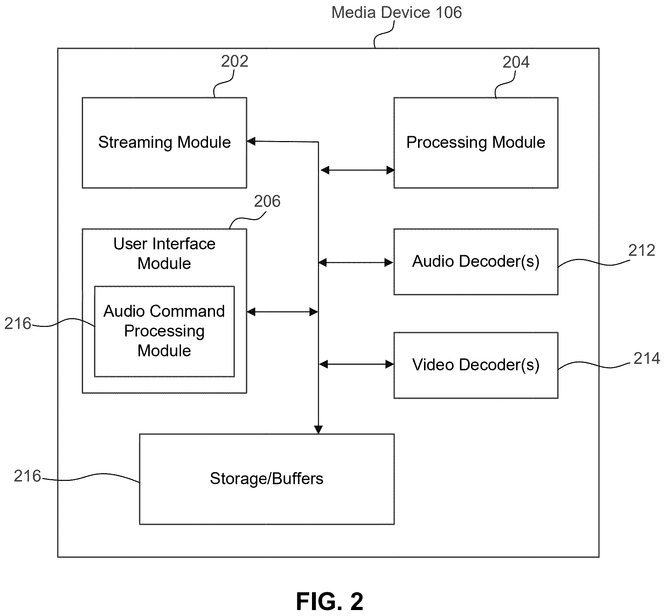

In some embodiments, the audio data may be alternatively or additionally processed and analyzed by an audio command processing module 216 in the media device 106 (see FIG. 2). The media device 106 and the system servers 126 may then cooperate to pick one of the verbal commands to process (either the verbal command recognized by the audio command processing module 130 in the system servers 126, or the verbal command recognized by the audio command processing module 216 in the media device 106).

FIG. 2 illustrates a block diagram of an example media device 106, according to some embodiments. Media device 106 may include a streaming module 202, processing module 204, storage/buffers 208, and user interface module 206. As described above, the user interface module 206 may include the audio command processing module 216.

The media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, the user 132 may interact with the media device 106 via, for example, the remote control 110. For example, the user 132 may use the remote control 110 to interact with the user interface module 206 of the media device 106 to select content, such as a movie, TV show, music, book, application, game, etc. The streaming module 202 of the media device 106 may request the selected content from the content server(s) 120 over the network 118. The content server(s) 120 may transmit the requested content to the streaming module 202. The media device 106 may transmit the received content to the display device 108 for playback to the user 132.

In streaming embodiments, the streaming module 202 may transmit the content to the display device 108 in real time or near real time as it receives such content from the content server(s) 120. In non-streaming embodiments, the media device 106 may store the content received from content server(s) 120 in storage/buffers 208 for later playback on display device 108.

### Application Pre-Launch System

A computing device, such as a mobile phone or streaming media device, will often have different apps available for a user to select. When a user selects and launches a particular app, there is a startup process that must be performed both locally on the user's device and on a server to which the app may be connected and from which the app receives information. These startup processes take time and often cause a delay between the time the user launches an app, and the time when the app is connected to the server and the user is actually able to use and interact with the app. It would improve the user experience to reduce this time between the user launching the app and the time when the app is connected to the server, thus allowing the user to actually use the app.

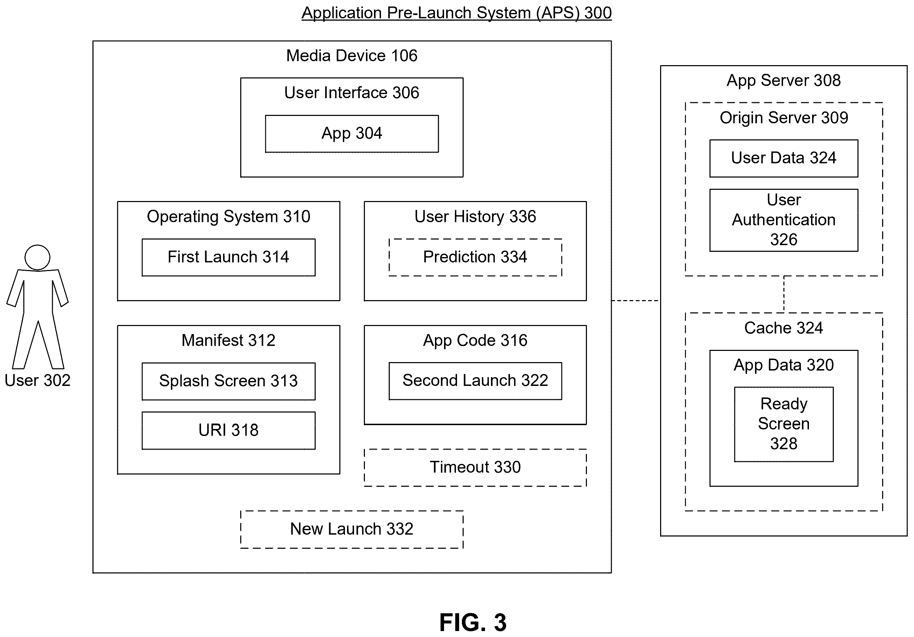

FIG. 3 is a block diagram 300 illustrating example functionality for an application pre-launch system (APS) 300, according to some embodiments. APS 300 reduces the time between when a user 302 selects an app or launches an app 304, and when the app 304 is communicatively coupled to an app server 308 and thus is available and ready for use by the user 302. As will be described in greater detail below, APS 300 may reorganize, reorder, and/or modify the launch functionality so that the app 304 is available and ready for use faster than a conventional start up process would allow.

User 302 may include any human user who is interacting with a media device 106. As described above, media device 106 may include any computing device that is configured to provide or stream media content (e.g., music, videos, movies, games, and other multimedia) for user consumption or use. Example media devices 106 include a mobile phone, a tablet, or a laptop. In some embodiments, the media device 106 may include a television with integrated streaming media functionality (e.g., SMART television), or in some embodiments, the streaming media functionality may be integrated into a standalone box or device that may be connected to a television or other monitor.

The media device 106 may include a user interface 306. User interface 306 may include a home screen or any interface that allows the user 302 to access, launch, and interact with any one of one or more apps 304. For simplicity, only a single app 304 is illustrated, however it is understood that user interface 306 may include any number of apps 304 spread across multiple screens (of user interface 306) or arranged into different groups. In some embodiments, the user interface 306 may be displayed on a television or other monitor connected to the media device 106.

App 304 may include an app, computer application, computing program, web application, or other computing functionality that is configured to perform some set of functionality. For simplicity, app 304 will primarily be described as an app configured to provide or stream content to the user, such as video, music, games, and/or other multimedia or data. However, it is understood that app 304 may include any type of app in which customized content for user 302 is provided to the user 302 based on user account information and/or location information. In some embodiments, the app 304 may receive this customized user data from an app server 308.

In some embodiments, app 304 may be communicatively coupled to or provide information to and receive information from app server 308. App server 308 may include any computing device that is configured to support the functionality or provide data to app 304. In some embodiments, app server 304 may include a set of one or more computing devices which are communicatively coupled in a network arrangement, such as in a cloud computing set up. In the example illustrated, app server 308 may include both an origin server 309 and a cache 324 that are communicatively coupled to each other in a networked computing setup, and which may reside in different geographic locations. In some embodiments, app server 308 may include a cloud-computing environment. As noted above, app server 308 may provide customized information that is accessible to the user 302 and displayed via app 304 and generate responses to user commands received via app 304. However, there is often a setup or startup process that is required to happen between the time the user 302 launches the app 304 and the time when the app 304 is ready for use (e.g., is connected to or has received information from app server 308).

Generally speaking, a startup process begins when a user selects an app to launch. Upon receiving a launch command for the app, there may various launch processes performed locally on the user device prior to executing the app. These local processes take time and use computing cycles to be performed and may need to be completed before executing the app and initiating any contact or communications with a backend server.

Only after the user device has been locally prepared, will the user device load and launch program code for the selected app. This code may be executed locally and at some point in the program code, the program may make a call to the backend server to which the app is connected. Only after receiving this call from the code of the app, will the backend server then begin its own start up process (which take additional time and additional computing cycles) that will be necessary in order to serve the app the proper data for the user.

In this general startup process, it is only after the user device has gone through its setup processes, has executed the program code which has made a call to the server, and the server has gone through its own setup or process processes and provided some set of information or data back to the app to be displayed via the user device, that the user can actually use the app. All these various processes create a delay between the time a user launches an app and the time when the app is actually ready for use by the user. Additionally the general startup process wastes local computing cycles of the user device, which has allocated resources to the launched app and is waiting for data to be provided by the server before the app is ready for use by a user.

APS 300, as illustrated in FIG. 3, may reduce the wait time of media device 106 between the user 302 launching the app 304 and the time when the app server 308 is ready to provide data to the app 304, such that the app 304 is available for use. In some embodiments, APS 300 may cause previously sequential processes (in the general startup process) to execute in parallel. For example, rather than waiting for the media device 106 to complete its startup process, and then waiting for the app code 316 to make an initial call to the app server 308, APS 300 may make an earlier first launch 314 call to the app server 308 prior to executing the program code for the app 304 (i.e., app code 316) or even prior to completing its own setup or launch computing processes (e.g., which may need to be performed prior to executing app code 316), so that the app server 308 can begin its own startup computing processes in parallel with the local computing processes of the media device 106.

As noted above, a user 302 may select an app 304 to launch from a user interface 306 of a media device 106. In some embodiments, an operating system 310 may receive the selection and/or launch command of the app 304. As used herein, and unless otherwise indicated, the terms selection and launch with regard to app 304 may be used interchangeably. Upon receiving the selection of app 304, the operating system 310 (e.g. which may include firmware of media device 106) may begin a local startup process that prepares the media device 106 to execute app 304 (e.g., which may include loading and launching app code 316 as part of those local startup, setup, or launch processes).

In some embodiments, these local processes executed by the operating system 310 may begin with operating system 310 retrieving and loading a manifest 312 into a memory of media device 106 (e.g., this occurs prior the execution of app code 316). Manifest 312 may be a startup file associated with the app 304. The manifest 312 may include various information about app 304 that directs operating system 310 on how to prepare media device 106 for the execution of app 304. This information in manifest 312 may include a description of the app, display resolution information, user settings, memory requirements, a splash screen 313, etc.

The splash screen 313 may include a graphic, welcome screen, logo, or other dynamic or static interface that is displayed on user interface 306 while the background processes to launch app 304 are being performed and the app 304 is being prepared for use. In some embodiments, upon receiving a selection of app 304, operating system 310 may provide the splash screen 313 for display on the user interface 310. The splash screen 313 may serve as an acknowledgement to user 302 that their command to launch 304 has been received and is ongoing. In some embodiments, the manifest 312 may point to a network location where media device 106 may access or retrieve splash screen 313. In some embodiments, the splash screen 313 may be stored in local memory or in a local disk storage.

However, prior to executing the app code 316, the operating system 310 may perform a number of local processes in preparation for the execution of app code 316. These local processes may include performing memory management (e.g., removing data objects from memory to make space for the loading of and/or execution of app code 316), retrieving and/or loading app code 316 into memory, loading a virtual environment in which to execute app 304, performing compilations of portions of app code 316, etc. Only after the local computing environment of media device 106 has been set up by operating system 310 performing whatever local processes are required, can app code 316 then be executed by operating system 310.

As described above, in the general startup process it is only after the local processes of the operating system have been completed, and the app code executed, that at some point in the execution of app code, the app code will make a call to server that will cause the server to initiate its own boot or set up processes associated with supporting the execution of the app.

However, rather than waiting until the operating system 310 has completed its local set up processes on media device 106, and waiting for the execution of app code 316, and waiting for app code 316 to make a service call to app server 308 which would then initiate app server 308 running its own launch or set up processes, APS 300 may expedite this process by making a first launch call 314 to app server 308 before executing app code 316, and in some embodiments, before performing or completing its own local memory management and other set up processes.

In some embodiments, upon loading manifest 312, operating system 310 may make a first launch call 314 to app server 308. This first launch call 314 may signal app server 308 to begin preparing itself to serve data to app 304 for use by user 302. The first launch call 314 may include a user identifier or other authentication/identification information for user 302, information about the type of media device 106 and its capabilities, version information for app 304, and/or any other information that may be used by app 308 in its own start up processes for app 304.

By receiving first launch call 314 earlier in the launch process for app 304, app server 308 may be able to perform its own app set up processes while operating system 310 is performing its own local setup processes at media device 106 (as described above). This may allow the app server 308 may be ready before app code 316 has been executed locally by operating system 310 at media device 106, or at least ready faster thus reducing the time between a launch call for 304 and the time when app 304 has received app data 320 from app server 308 and is ready for use by user 302. This is an improvement over the general start up processes in which the first call to the server only comes from the program code for an app and after the user device has performed its local processes and executed the program code.

In some embodiments, manifest 312 may include a universal resource identifier (URI) 318. URI 318 may include a network address that points to a location of an origin server 309 (which may be one of the computing devices of app server 308). As used herein, the terms origin server 308 and app server 308 may be used interchangeably, unless otherwise specified. The origin server 308 may be configured to receive a first launch call 314, and prepare app data 320 in advance of app server 308 receiving a second launch call 322 from app code 316.

In contrast to general startup operations in which a call is made to a backend server only after app has been executed and is ready to receive information from the server, in APS 302, the first launch call 314 is made by operating system 310 before app code 316 has been executed and thus app code 316 is not ready to receive information from app server 308. As such, the origin server 308 may not be able to transmit app data 320 directly to media device 106 as is done in general startup operations.

Since the origin server 308 may not be able to immediately transmit app data 320 to media device 106 (because app 304 may not be ready to receive the app data 320), the origin server 308 may transmit the app data 320 or store the app data 320 in a cache 324. In some embodiments, cache 324 may be another computing device or server (different from origin server 309) with a different network address or URI than original server 309, but part of the same app server 308 network. Cache 324 may be communicatively coupled to the origin server 308, and cache 324 may be configured to provide or make available any cached data (e.g., app data 320) to media device 106 upon receiving a second launch call 322.

As noted above, upon receiving a selection of app 304 (e.g., a request or launch command from user 302 to activate app 304), operating system 310 may load a manifest file 312 into memory of media device 106. In some embodiments, operating system manifest file 312 may already exist in memory or a local cache of media device 106. In some embodiments, operating system 310 may need to retrieve manifest file 312 from a network location.

In some embodiments, manifest 312 may include a network location of a splash screen 313 which operating system 312 may retrieve and display on user interface 306. In other embodiments, splash screen 313 may already be locally available from disk or memory, and operating system 310 provides the splash screen 313 for display via user interface 306.

Either before or after the display of splash screen 313, operating system 310 may identify a URI 318 from manifest 312 identifying a network location or network address of origin server 309. Operating system 310 may then make the first launch call 314 to app server 308.

Upon receiving first launch call 314, app server 308 may perform a set of functionality to prepare app server 308 (or one or more other devices within a network of app server 308) to receive and respond to commands from app 304. Some of this functionality may include performing user authentication 326, to authenticate the media device 106 and/or an account associated with the user 302 (e.g., based on a user ID, phone number, or other account identifier received with first launch call 314). In some embodiments, app server 308 may also need to retrieve or collect a set of user data 324 from one more storage locations, such as a database (not shown).

User data 324 may include any data stored on the app server 308 (or its networked storage devices) that includes information specific for user 302, based on user account, device, and/or location information. Example user data 324 may include usage history, bookmarks / favorites, subscription / account information, etc.

Rather than communicating directly with app 304, since app 304 is not yet fully executional on media device 106, app server 308 may store any user data 324, authentication information, content data, and other data on a cache 324 for temporary storage as app data 320. App data 320 may include any information that will be required by or provided to app 304 in order for app 304 to be ready to receive commands from user 302. In some embodiments, if there are any errors that occur with user authentication 326 and/or the collection of user data 324, this error information may be stored as or with app data 320.

As noted above, as part of its local launch processes, operating system 310 may begin preparing the local virtual environment for executing app code 316 on media device 106 after providing a first launch call 314 to app server 308. One of the advantages of preparing the local environment after providing the first launch call 314 to app server 308, is that in this way APS 300 allows app server 308 to prepare itself to serve app 304 while operating system 310 is simultaneously preparing itself to execute app 304, which reduces the wait time of media device 106 before the app 304 is executional, saves time for the user 302 who does not want to wait for app server 308, and improves overall system throughput.

Once the local execution environment of media device 106 is prepared, operating system 310 may load or call, compile, and execute app code 316. The app code 316 may be the actual programming code for app 304 that is executed locally on media device 106. During its execution, app code 316 may include a second launch call 322. This second launch call 322 may be notification to cache 324 that app 304 is ready to receive app data 320. As noted above, the second launch call 322 may be directed to a different URI 318 relative to the first launch call 314.

In response to receiving the second launch call 322, cache 324 may transmit, provide, or otherwise make available app data 320 to app 304. Upon receiving app data 302, app 304 may then display a ready screen 328 (which may be provided as part of app data 320, or otherwise available separately) via user interface 306 or app 304. The ready screen 328 may be the first interactive screen or interface that the user 302 may interact with or to provide commands in operating app 304, and may be replace splash screen 313 or otherwise be displayed after splash screen 313 when the app 304 is ready to receive user commands. The ready screen 326 may be a signal to user 302 that the app 304 is ready to receive user commands.

In some embodiments, various errors or other anomalies may occur. For example, there may have been a delay or crash at app server 308, or a dropped communication resulting in incomplete app data 320 or no app data 320 at all. This may create a situation in which cache 324 may receive second launch call 322 before app data 320 has been assembled by app server 308 (and thus the app data 320 may not be ready or available for app 304 in cache 324).

APS 300 may include various functionality to address these types of situations. In some embodiments, APS 300 may include a timeout 330. Timeout 330 may include a period of time or number of computing cycles operating system 310 (in executing app code 316) that operating system 310 may wait before issuing a new launch call 332. The timeout 330 may allow extra time for origin server 309 to complete any ongoing startup processes including the assembly of app data 320 which may have been delayed. Timeout 330 may allow origin server 309 to continue its ongoing processes which began with first launch call 314.

However, upon the expiration of timeout 330, app code 316 or operating system 310 may issue a new launch call 332. New launch call 332 would restart the app server 308 initiation for serving app data 320 to app 304. Upon receiving new launch call 332, app server 308 may perform similar processes as described above with respect to first launch call 314, such as collecting user data 324, performing user authentication 326, or performing other startup functionality anew. However, rather than providing the app data 320 to cache 324 for storage (as performed with respect to first launch call 314), app server 308 may directly provide the app data 320 to app 304. In some embodiments, the new launch call 332 may be provided to the same URI 318 of origin server 309. In some embodiments, the new launch call 332 may be provided to a device of app server 308 (not shown) different from origin server 309. In some embodiments, the timeout period 330 may begin when second launch call 322 is provided to cache 324, and stopped upon either the receipt of app data 320 or the expiration of a timer (at which point new launch call 332 is initiated).

In some embodiments, APS 300 may not provide a timeout period 330. Thus, if app data 320 is not ready when second launch call 322 is provided to cache 324, then operating system 310 may immediately provide the new launch call 332. In some embodiments, upon receiving the second launch call 322, cache 324 may return either app data 320 or an empty set or error message indicating app data 320 is not stored in cache (e.g., has not been received from origin server 309). Upon receipt of an error, empty set, or other status message indicating app data 320 is not ready, either timeout 330 may begin, or a new launch call 332 may immediately be initiated.

In some embodiments, operating system 310 may be configured to detect one or more actions corresponding to a prediction 334. A prediction 334 may be an indicator that user 302 is likely to launch app 304. The prediction 334 may include one or more actions that are performed by user 302 or that occur before an actual launch command is received from the user 304. In some embodiments, operating system 310 may be configured to detect one or more actions or events that comprise a prediction 334.

In some embodiments, the prediction 334 may be based on a user history 336. User history 336 may include a collection of user interactions or user patterns / behavior and/or events over past dates and times. From the user history 336, APS 300 may generate one or more predictions 334, each prediction 334 comprising one or more actions and/or events that were detected prior to a user 302 launching app 304. Each prediction 334 may indicate that a user 302 is likely going to launch app 334 based on the performance of one or more actions. This likelihood may include a threshold, such as 51% or 70% based on user history 336.

For example, if a first user only uses a first app 304 90% of the time, then the user login action may be a prediction event 334 that the user 302 is likely to launch the first app 304. Then for example, upon detecting the user login (prediction event 334), the operating system 320 may initiate or provide the first launch command 314 to app server 308 even before the user 302 has issued a launch command for app 304.

In some embodiments, the detection of prediction 334 may cause operating system 310 to perform some local set up processes as well. For example, upon detection prediction 334, operating system 310 may load manifest 312 into memory and retrieve or load splash screen 313 into memory. Then, when the user 302 actually selects the app 304 for launch, the splash screen 313 may be immediately available for display and manifest 312 may be ready to use. Also, since first launch call 314 may have already been issued, upon receiving a user launch of app 304 (after a prediction event has been detected), no subsequent first launch call 314 is issued, only the second launch call 322 is initiate by app code 316 (as described above).

If the operating system 310 performs local processes upon detection of a prediction event 334, then operating system 310 may include its own timeout period 330 upon which any information loaded into memory (e.g., manifest 312 or splash screen 313) is either cleared or made available for garbage collection, in case the user 302 does not actually initiate a launch call to app 304 within the timeout period 330. Similarly, cache 324 may include its own garbage collection timeout period for app data 320, such that if a second launch command 322, is not received within the timeout period, the app data 320 may be discarded, removed from cache 324, or otherwise made available for garbage collection.

Another example of a prediction event 334 may be if a user 302 habitually starts app 304 at a particular date /time (e.g., M-F at 6:00pm, when the user arrives home from work). Thus, upon detecting that the user 302 is logged in and the time is 6:00pm and the day is a day between Monday - Friday, which may be the elements of the prediction 334, the first launch command 314 may be initiated.

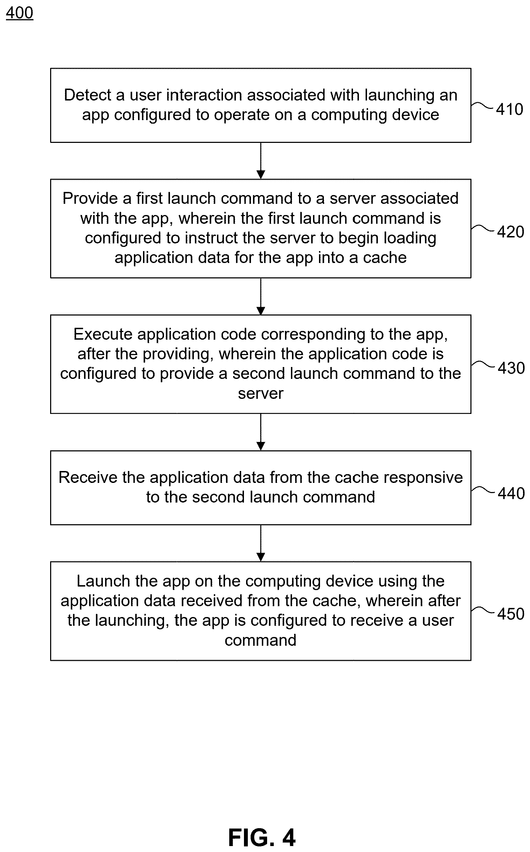

FIG. 4 is a flowchart for a method 400 for an application pre-launch system (APS) 300, according to an embodiment. Method 400 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 4, as will be understood by a person of ordinary skill in the art.

Method 400 shall be described with reference to FIG. 3. However, method 400 is not limited to that example embodiment. For example, the media device 106 may perform the operations described below with respect to method 400.

In step 410, a user interaction associated with launching an app operating on the computing device is detected. For example, media device 106 may receive a command from user 302 to launch app 304 (e.g., by selecting the app 304 from a home screen of a user interface 306).

In some embodiments, operating system 310 may detect that a user 302 is more likely than not to launch the app 304 based on identifying one or more actions of a prediction 334. The prediction 334 may include one or more actions that the user 304 has performed in the past which have preceded the user 304 launching the app 304, as identified from a user history 336. For example, the user history 336 may indicate that after using or launching a first app (not shown), the user has 60% of the time then launched app 304. Then for example, launching the first app may be the one more actions of prediction 334, which may cause operating system 310 to determine a user intent to launch app 304.

In step 420, a first launch command is provided to a server associated with the app, wherein the first launch command is configured to instruct the server to begin loading application data for the app into a cache. For example, operating system 310 may load a manifest 312 into a memory of the media device 106. From the manifest 312, the operating system 310 may identify a URI 318 pointing to an origin server 309 (of the app server 308 environment). In some embodiments, the manifest 312 may include a first launch call 314. The operating system 310 may then provide the first launch call 314 to the app server 308 located at the URI 318.

In some embodiments, the URI 318 may be retrieved or accessible from a network location (rather than in manifest 312). For example, URI 318 may be stored in a database or application registry. In some embodiments, a network accessible URI 318 may be accessible to and updated by a publisher of app 304. For example, if the publisher configures a new origin server to replace the old origin server, the URI 318 may be updated accordingly. In some embodiments, URI 318 may be stored as metadata across one or more files, in any location accessible to media device 106 and operating system 310, either locally or over a network connection.

In step 430, application code corresponding to the app is executed after the providing, wherein the application code is configured to provide a second launch command to the server. For example, in some embodiments, operating system 310 may perform some memory management to clear up memory space to load, compile (if needed), and execute the app code 316. This memory management may include removing existing items from memory. Once operating system 310 confirms that there is enough free memory space (in some embodiments, manifest 312 may indicate how much memory space is required), operating system 310 may load and execute app code 316. During the execution of app code 316, the app code 316 may include a second launch call 322.

The second launch call 322 may be directed to a second URI for cache 324. During the time that operating system 310 is performing the memory management, loading, compiling, and executing app code 316, origin server 309 may be performing its own launch or set up processes. For example, origin server 309 may perform user authentication 326 and collect user data 324 and other data that may be used by app 304. All this data and information may be accumulated into app data 320 and stored in cache 324. Once the second launch call 322 (of app code 316) is received by cache 324, the cache 324 may provide or make available the app data 320 to app 304.

In step 440, the application data is received from the cache responsive to the second launch command. For example, mobile device 106 may retrieve or receive the app data 320 from cache 324. In some embodiments, the app data 320 may include a ready screen 328.

In step 450, the app is launched on the computing device using the application data received from the cache, wherein after the launching, the app is configured to receive a user command. For example, upon receiving app data 320, app 304 may complete its launch or setup processes on mobile device 106, which may include displaying the ready screen 328 via user interface 306. The ready screen 328 may include the first screen of app 304 that is configured or able to receive user commands or provide content to the user 302. The user 302 may then issue commands to app 304, which may be processes locally by app 304, or may be processed through back-and-forth communications with app server 308.

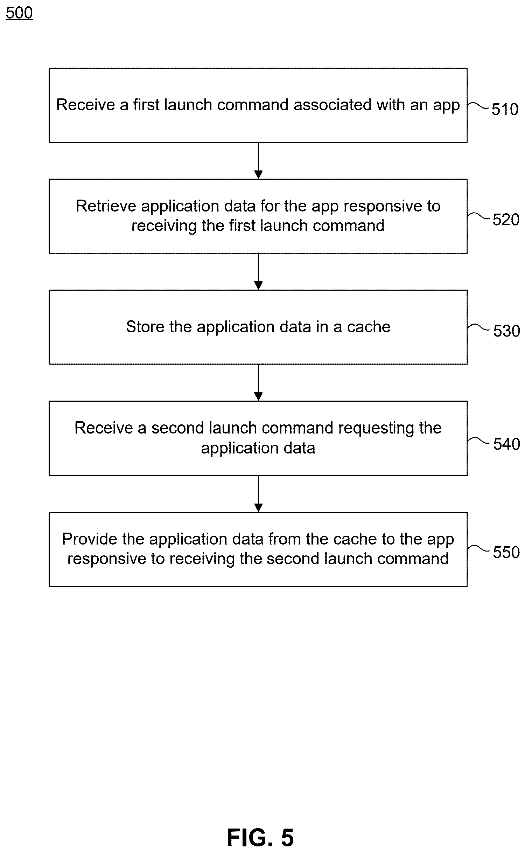

FIG. 5 is a flowchart for a method 500 for an application pre-launch system (APS) 300, according to another embodiment. Method 500 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 5, as will be understood by a person of ordinary skill in the art.

Method 500 shall be described with reference to FIG. 3. However, method 500 is not limited to that example embodiment. For example, the app server 308 may perform the operations described below with respect to method 500.

In step 510, a first launch command associated with an app is received. For example, app server 308 may receive a first launch command 314 from operating system 310. The first launch command 314 may be a precursor to or indication that app 304 is being launched. In some embodiments, the first launch command 314 may be received at an origin sever 309 which may perform user authentication 326 and other functionality as part of preparing app server 308 to service app 304.

In step 520, application data for the app is retrieved responsive to receiving the first launch command. For example, origin server 309 may gather or identify user data 324 that is to be provided to app 304. In some embodiments, app server 308 may identify a user account, user identifier, or other account information associated with the app 304 from the first launch command 314 which may include this type of information.

In step 530, the application data is stored in a cache. For example, origin server 308 may provide the user data 324, content data, and other information or data is to be provided to app 304 to a cache 324 for temporary storage as app data 320. Because the app 304 may not yet be launched and ready to receive any information from app server 308, origin server 309 may store the app data 320 in cache 324.

In step 540, a second launch command requesting the application data is recieved. For example, app server 308 may receive a second launch command 322. In some embodiments, the second launch command 322 may be initiated by the app code 316 being executed at the media device 106. The second launch command 322 may be an indication that the app 304 has been launched and is ready to receive the app data 320.

In step 550, the application data from the cache is provided to the app responsive to receiving the second launch command. For example, app server 308 may provide the app data 320 to media device 106 responsive to receiving the second launch command 322. In some embodiments, app server 308 may provide media device 106 (or app 304) a network address to where the app data 320 is stored, so that app 304 or media device 106 may retrieve, copy, or otherwise access the app data 320 from the network location.

### Example Computer System

Various embodiments may be implemented, for example, using one or more well-known computer systems, such as computer system 600 shown in FIG. 3. For example, the media device 106 may be implemented using combinations or sub-combinations of computer system 600. Also or alternatively, one or more computer systems 600 may be used, for example, to implement any of the embodiments discussed herein, as well as combinations and sub-combinations thereof.

Computer system 600 may include one or more processors (also called central processing units, or CPUs), such as a processor 604. Processor 604 may be connected to a communication infrastructure or bus 606.

Computer system 600 may also include user input/output device(s) 603, such as monitors, keyboards, pointing devices, etc., which may communicate with communication infrastructure 606 through user input/output interface(s) 602.

One or more of processors 604 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 600 may also include a main or primary memory 608, such as random access memory (RAM). Main memory 608 may include one or more levels of cache. Main memory 608 may have stored therein control logic (i.e., computer software) and/or data.

Computer system 600 may also include one or more secondary storage devices or memory 610. Secondary memory 610 may include, for example, a hard disk drive 612 and/or a removable storage device or drive 614. Removable storage drive 614 may be a floppy disk drive, a magnetic tape drive, a compact disk drive, an optical storage device, tape backup device, and/or any other storage device/drive.

Removable storage drive 614 may interact with a removable storage unit 618. Removable storage unit 618 may include a computer usable or readable storage device having stored thereon computer software (control logic) and/or data. Removable storage unit 618 may be a floppy disk, magnetic tape, compact disk, DVD, optical storage disk, and/ any other computer data storage device. Removable storage drive 614 may read from and/or write to removable storage unit 618.

Secondary memory 610 may include other means, devices, components, instrumentalities or other approaches for allowing computer programs and/or other instructions and/or data to be accessed by computer system 600. Such means, devices, components, instrumentalities or other approaches may include, for example, a removable storage unit 622 and an interface 620. Examples of the removable storage unit 622 and the interface 620 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 600 may further include a communication or network interface 624. Communication interface 624 may enable computer system 600 to communicate and interact with any combination of external devices, external networks, external entities, etc. (individually and collectively referenced by reference number 628). For example, communication interface 624 may allow computer system 600 to communicate with external or remote devices 628 over communications path 626, which may be wired and/or wireless (or a combination thereof), and which may include any combination of LANs, WANs, the Internet, etc. Control logic and/or data may be transmitted to and from computer system 600 via communication path 626.

Computer system 600 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 600 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 600 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 600, main memory 608, secondary memory 610, and removable storage units 618 and 622, as well as tangible articles of manufacture embodying any combination of the foregoing. Such control logic, when executed by one or more data processing devices (such as computer system 600 or processor(s) 604), may cause such data processing devices to operate as described herein.

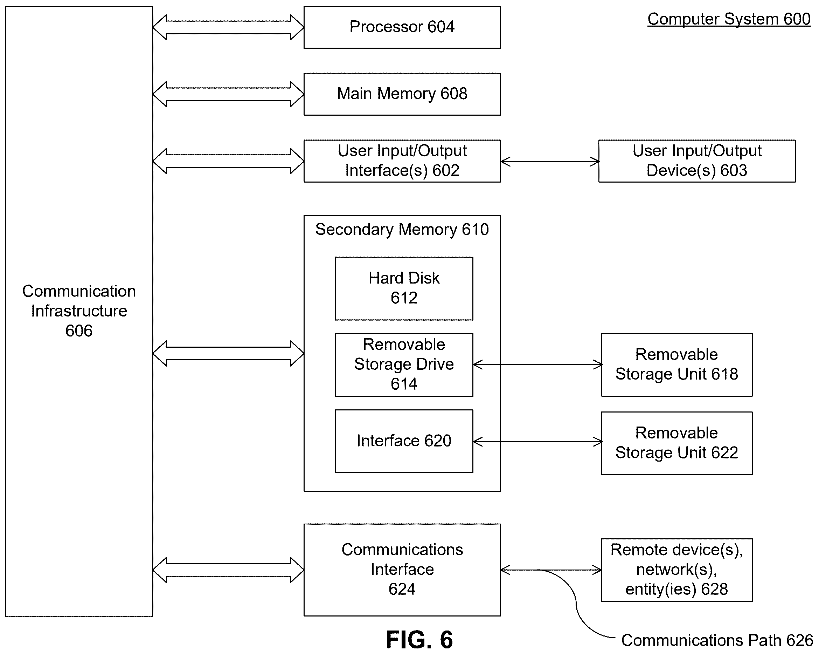

Based on the teachings contained in this disclosure, it will be apparent to persons skilled in the relevant art(s) how to make and use embodiments of this disclosure using data processing devices, computer systems and/or computer architectures other than that shown in FIG. 6. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

### Numbered aspects

By way of non-limiting example, some aspects of the disclosure are set out in the following numbered clauses.
Numbered Clause 1. A computer-implemented method for launching an app, comprising:
   detecting, by at least one computer processor of a computing device, a user interaction associated with launching the app configured to operate on the computing device;
   providing, by the computing device, a first launch command to a server associated with the app, wherein the first launch command is configured to instruct the server to begin loading application data for the app into a cache;
   executing, by the computing device, application code corresponding to the app, after the providing, wherein the application code is configured to provide a second launch command to the server;
   receiving, by the computing device, the application data from the cache responsive to the second launch command; and
   launching the app on the computing device using the application data received from the cache, wherein after the launching, the app is configured to receive a user command.
Numbered Clause 2. The computer-implemented method of Numbered Clause 1, further comprising:
   identifying a manifest file associated with the app;
   identifying a universal resource identifier (URI) corresponding to the server, the URI identifying a network location or network address of the server; and
   wherein the providing comprises providing the first launch command to the URI corresponding to the server.
Numbered Clause 3. The computer-implemented method of Numbered Clause 1 or 2, wherein the user interaction comprises an action to launch the app from the computing device.
Numbered Clause 4. The computer-implemented method of any preceding Numbered Clause, wherein the detecting comprises determining that user interaction comprises one or more actions corresponding to a prediction, wherein the prediction includes the one or more actions that preceded a user subsequently launching the app as determined based on a usage history of the user.
Numbered Clause 5. The computer-implemented method of any preceding Numbered Clause, wherein the application data comprises personalized information for a user associated with performing the user interaction.
Numbered Clause 6. The computer-implemented method of any preceding Numbered Clause, wherein the executing comprises
   performing memory management on a memory of the computing device, wherein the performing the memory management comprises removing one or more objects from the memory; and
   loading the application code into the memory after performing the memory management and prior to the executing.
Numbered Clause 7. The computer-implemented method of any preceding Numbered Clause, further comprising:
   providing a splash screen corresponding to the app for display responsive to the detecting and prior to the launching.
Numbered Clause 8. The computer-implemented method of Numbered Clause 7, further comprising:
   displaying, responsive to the launching, an interactive screen corresponding to the app for display, wherein the interactive screen replaces the splash screen, and wherein at least portion of the interactive screen is generated based on the application data received from the cache.
Numbered Clause 9. A system for launching an app, comprising:
   one or more memories;
   at least one processor each coupled to at least one of the memories and configured to perform operations comprising:
      detecting a user interaction associated with launching the app configured to operate on a computing device;
      providing a first launch command to a server associated with the app, wherein the first launch command is configured to instruct the server to begin loading application data for the app into a cache;
      executing application code corresponding to the app, after the providing, wherein the application code is configured to provide a second launch command to the server;
      receiving the application data from the cache responsive to the second launch command; and
      launching the app on the computing device using the application data received from the cache, wherein after the launching, the app is configured to receive a user command.
Numbered Clause 10. The system of Numbered Clause 9, the operations further comprising:
   identifying a manifest file associated with the app;
   identifying a universal resource identifier (URI) corresponding to the server, the URI identifying a network location or network address of the server; and
   wherein the providing comprises providing the first launch command to the URI corresponding to the server.
Numbered Clause 11. The system of Numbered Clause 9 or 10, wherein the user interaction comprises an action to launch the app from the computing device.
Numbered Clause 12. The system of any of Numbered Clauses 9 to 11, wherein the detecting comprises determining that user interaction comprises one or more actions corresponding to a prediction, wherein the prediction includes the one or more actions that preceded a user subsequently launching the app as determined based on a usage history of the user.
Numbered Clause 13. The system of any of Numbered Clauses 9 to 12, wherein the application data comprises personalized information for a user associated with performing the user interaction.
Numbered Clause 14. The system of any of Numbered Clauses 9 to 13, wherein the executing comprises
   performing memory management on a memory of the computing device, wherein the performing the memory management comprises removing one or more objects from the memory; and
   loading the application code into the memory after performing the memory management and prior to the executing.
Numbered Clause 15. The system of any of Numbered Clauses 9 to 14, the operations further comprising:
   providing a splash screen corresponding to the app for display responsive to the detecting and prior to the launching.
Numbered Clause 16. The system of Numbered Clause 15, the operations further comprising:
   displaying, responsive to the launching, an interactive screen corresponding to the app for display, wherein the interactive screen replaces the splash screen, and wherein at least portion of the interactive screen is generated based on the application data received from the cache.
Numbered Clause 17. A non-transitory computer-readable medium having instructions stored thereon that, when executed by at least one computing device, cause the at least one computing device to perform operations for launching an app, the operations comprising:
   detecting a user interaction associated with launching the app configured to operate on a computing device;
   providing a first launch command to a server associated with the app, wherein the first launch command is configured to instruct the server to begin loading application data for the app into a cache;
   executing application code corresponding to the app, after the providing, wherein the application code is configured to provide a second launch command to the server;
   receiving the application data from the cache responsive to the second launch command; and
   launching the app on the computing device using the application data received from the cache, wherein after the launching, the app is configured to receive a user command.
Numbered Clause 18. The non-transitory computer-readable medium of Numbered Clause 17, the operations further comprising:
   identifying a manifest file associated with the app;
   identifying a universal resource identifier (URI) corresponding to the server, the URI identifying a network location or network address of the server; and
   wherein the providing comprises providing the first launch command to the URI corresponding to the server.
Numbered Clause 19. The non-transitory computer-readable medium of Numbered Clause 17 or 18, wherein the user interaction comprises an action to launch the app from the computing device.
Numbered Clause 20. The non-transitory computer-readable medium of any of Numbered Clauses 17 to 19, wherein the detecting comprises determining that user interaction comprises one or more actions corresponding to a prediction, wherein the prediction includes the one or more actions that preceded a user subsequently launching the app as determined based on a usage history of the user.

## Claims

1. A computer-implemented method for launching an app, comprising:
detecting, by at least one computer processor of a computing device, a user interaction associated with launching the app configured to operate on the computing device;
providing, by the computing device, a first launch command to a server associated with the app, wherein the first launch command is configured to instruct the server to begin loading application data for the app into a cache;
executing, by the computing device, application code corresponding to the app, after the providing, wherein the application code is configured to provide a second launch command to the server;
receiving, by the computing device, the application data from the cache responsive to the second launch command; and
launching the app on the computing device using the application data received from the cache, wherein after the launching, the app is configured to receive a user command.

2. The computer-implemented method of claim 1, further comprising:
identifying a manifest file associated with the app;
identifying a universal resource identifier (URI) corresponding to the server, the URI identifying a network location or network address of the server; and
wherein the providing comprises providing the first launch command to the URI corresponding to the server.

3. The computer-implemented method of claim 1 or 2, wherein the user interaction comprises an action to launch the app from the computing device.

4. The computer-implemented method of any preceding claim, wherein the detecting comprises determining that user interaction comprises one or more actions corresponding to a prediction, wherein the prediction includes the one or more actions that preceded a user subsequently launching the app as determined based on a usage history of the user.

5. The computer-implemented method of any preceding claim, wherein the application data comprises personalized information for a user associated with performing the user interaction.

6. The computer-implemented method of any preceding claim, wherein the executing comprises
performing memory management on a memory of the computing device, wherein the performing the memory management comprises removing one or more objects from the memory; and
loading the application code into the memory after performing the memory management and prior to the executing.

7. The computer-implemented method of any preceding claim, further comprising:
providing a splash screen corresponding to the app for display responsive to the detecting and prior to the launching, preferably further comprising:
displaying, responsive to the launching, an interactive screen corresponding to the app for display, wherein the interactive screen replaces the splash screen, and wherein at least portion of the interactive screen is generated based on the application data received from the cache.

8. A system for launching an app, comprising:
one or more memories;
at least one processor each coupled to at least one of the memories and configured to perform operations comprising:
detecting a user interaction associated with launching the app configured to operate on a computing device;
providing a first launch command to a server associated with the app, wherein the first launch command is configured to instruct the server to begin loading application data for the app into a cache;
executing application code corresponding to the app, after the providing, wherein the application code is configured to provide a second launch command to the server;
receiving the application data from the cache responsive to the second launch command; and
launching the app on the computing device using the application data received from the cache, wherein after the launching, the app is configured to receive a user command.

9. The system of claim 8, the operations further comprising:
identifying a manifest file associated with the app;
identifying a universal resource identifier (URI) corresponding to the server, the URI identifying a network location or network address of the server; and
wherein the providing comprises providing the first launch command to the URI corresponding to the server.

10. The system of claim 8 or 9, wherein the user interaction comprises an action to launch the app from the computing device.

11. The system of any of claims 8 to 10, wherein the detecting comprises determining that user interaction comprises one or more actions corresponding to a prediction, wherein the prediction includes the one or more actions that preceded a user subsequently launching the app as determined based on a usage history of the user.

12. The system of any of claims 8 to 11, wherein the application data comprises personalized information for a user associated with performing the user interaction.

13. The system of any of claims 8 to 12, wherein the executing comprises
performing memory management on a memory of the computing device, wherein the performing the memory management comprises removing one or more objects from the memory; and
loading the application code into the memory after performing the memory management and prior to the executing.

14. The system of any of claims 8 to 13, the operations further comprising:
providing a splash screen corresponding to the app for display responsive to the detecting and prior to the launching, preferably the operations further comprising:
displaying, responsive to the launching, an interactive screen corresponding to the app for display, wherein the interactive screen replaces the splash screen, and wherein at least portion of the interactive screen is generated based on the application data received from the cache.

15. A non-transitory computer-readable medium having instructions stored thereon that, when executed by at least one computing device, cause the at least one computing device to perform operations for launching an app, the operations comprising the computer-implemented method for launching an app of any of claims 1 to 7.
